# EUROPÄISCHE PATENTSCHRIFT

(11) **EP 2 789 283 B1**
(45) Veröffentlichungstag und Bekanntmachung des Hinweises auf die Patenterteilung: **26.04.2017**
(21) Anmeldenummer: 14400025.4
(22) Anmeldetag: 11.04.2014
(51) Int. Cl.: A47L 9/28

(54) **Sauggerät und Verfahren zum Betreiben eines Sauggeräts**
Suction device and method for operating the same
Appareil d'aspiration et procédé de fonctionnement d'un appareil d'aspiration

(30) Priorität: 12.04.2013 DE 102013006288
(43) Veröffentlichungstag der Anmeldung: 15.10.2014
(73) Patentinhaber: Festool GmbH, 73240 Wendlingen am Neckar (DE)
(72) Erfinder: Werbach, Günther, 89264 Weißenhorn/Oberhausen (DE); Barabeisch, Markus, 89269 Vöhringen (DE); Geisler, Frank, 87700 Memmingen (DE)
(74) Vertreter: Patentanwälte Bregenzer und Reule Partnerschaftsgesellschaft mbB

(56) Entgegenhaltungen:
- EP-A2- 0 212 978
- EP-A2- 0 295 594
- DE-A1- 4 210 061
- DE-A1- 19 920 058
- DE-A1-102011 015 574
- DE-U1-202012 003 282

## Beschreibung

Die Erfindung betrifft ein Sauggerät, insbesondere ein stationäres Sauggerät, gemäß dem Oberbegriff des Anspruchs 1. Die Erfindung betrifft ferner ein Verfahren zum Betreiben eines insbesondere stationären Sauggeräts.

Ein derartiges Sauggerät und so verfahren ist beispielsweise in DE 42 10 061 A1 erläutert.

Bei dem bekannten Sauggerät kann die Drehzahl elektronisch automatisch sowohl mit dem Ist-Volumenstromwert wie auch mit einem Einstellwert/Sollwert verknüpft werden, wodurch sich eine vom Betreiber unabhängige vollautomatische Saugleistungsanpassung ergibt.

Eine Vakuum-Reinigungsanlage gemäß EP 0 295 594 A2 kann in Abhängigkeit ihrer saugseitigen Belastung selbst auf einen mittleren Betriebszustand bei sparsamstem Energieverbrauch einregeln.

Ein Sauger gemäß DE 20 2012 003 282 U1 erläutert einen Sauger mit einer Gerätesteckdose, an die ein Gerät elektrisch anschließbar ist, dessen Leistungsaufnahme von einem Strom/Leistungssensor erfasst wird, wobei ein Prozessor unter Berücksichtigung des Strom/Leistungsaufnahmewerts ein Signal zur Reinigung eines Filters des Saugers erzeugt.

EP 0 212 978 A2 betrifft ein Verfahren und ein Gerät zur Steuerung eines Saugunterdrucks in einer Saugsammelleitung.

Ein Sauggerät mit einem Motorsensor zur Steuerung eines Abreinigungsprozesses geht aus DE 10 2011 015 574 A1 hervor.

DE 199 20 058 A1 betrifft eine Absaugvorrichtung mit einer Stammrohrleitung, an der ein statischer Druck erfasst wird, um eine Absaugvorrichtung zu regeln.

Bei einem Sauggerät, das beispielsweise Gesundheitsanforderungen oder Anforderungen bezüglich der Arbeitsplatzsicherheit erfüllen muss, sind am Ort der Absaugung oder am Verbraucher-Anschluss eines Verbrauchers, beispielsweise einer Hand-Werkzeugmaschine, eines Schleifgerätes und dergleichen, Mindest-Strömungsgeschwindigkeiten des Saugstroms gefordert. Dies gilt sowohl für mobile Sauggeräte, d.h. Sauggeräte, die an den jeweiligen Anwendungsort gebracht werden, als auch für Sauggeräte, die z.B. in einer Werkstatt oder einem Industrie-Gebäude stationär angeordnet sind und mehrere Verbraucher-Anschlussstellen für Verbraucher haben.

Die Norm EN 60335-2-69 verlangt beispielsweise eine Saugstrom-Strömungsgeschwindigkeit von 20 m pro Sekunde für die Staubklassen M und H. Mit der Strömungsgeschwindigkeit kor reliert dann der jeweilige Volumenstrom über den Querschnitt der Saugleitung, beispielsweise eines Schlauchs.

In der Praxis ist es jedoch sehr schwierig, direkt an der Zapfstelle bzw. am Verbraucher-Anschluss, wo der Verbraucher angeschlossen wird, eine Strömungserfassung durchzuführen. Daher wird man in der Regel ein Sauggerät so konfigurieren, dass es in jedem Fall an allen geforderten Verbraucher-Anschlussstellen die Mindest-Strömungsgeschwindigkeit des Saugstroms bereitstellen kann. Das ist jedoch unökonomisch oder erfordert manuelle Eingriffe, d.h. dass beispielsweise ein Bediener an einer Frontseite eines Sauggeräts den Querschnitt des jeweiligen Saugschlauchs einstellen muss, damit das Sauggerät die notwendige Leistung erbringt und beispielsweise am Verbraucher-Anschlussende des Saugschlauchs eine ausreichend große Saugstrom-Strömungsgeschwindigkeit zur Verfügung steht.

Es ist daher die Aufgabe der vorliegenden Erfindung, eine optimierte Anpassung der Saugleistung des Saugaggregats bereitzustellen.

Zur Lösung der Aufgabe ist ein Sauggerät gemäß der technischen Lehre des Anspruchs 1 vorgesehen.

Es ist ein Aspekt der vorliegenden Erfindung, dass im Bereich des Sauggeräts eine sensorische Erfassung von einem oder mehreren Werten, die charakteristisch für die Strömungsgeschwindigkeit sind, durchgeführt wird.

Beispielsweise kann die Geschwindigkeit des Saugstroms an einer oder mehreren Stellen des Sauggeräts erfasst werden. Der jeweilige Sensor der Sensoranordnung umfasst dann beispielsweise einen Drucksensor.

Eine vorteilhafte Methode ist jedoch, dass einer oder mehrere Druckwerte, die einen Indikator für die Strömungsgeschwindigkeit des Saugstroms darstellen, erfasst wird.

Trotz der sozusagen internen Messtechnik ist bei dem Sauggerät eine optimierte Anpassung an die jeweilige Leistung, die vom Sauggerät zur Bereitstellung der Strömungsgeschwindigkeit am Verbraucher-Anschluss gefordert wird, beispielsweise am vorderen, freien Ende des Saugschlauchs oder an einer oder mehreren Zapfstellen bzw. Verbraucher-Anschlüssen für Saugstrom-Verbraucher, optimal eingestellt. Die Regelung des Sauggeräts erfolgt in an sich bekannter Weise durch einen Vergleich des jeweiligen Istwerts mit dem Sollwert, d.h. dass dann die Saugleistung erhöht wird, wenn der Istwert kleiner als der Sollwert ist, während die Saugleistung abgesenkt wird, wenn der Istwert bereits größer als der Sollwert ist. Dazu wird der Saugleistungsvorgabewert, mit dem beispielsweise der Antriebsmotor angesteuert wird, erhöht oder abgesenkt. Der Regelung-Sollwert und der Regelung-Istwert sind oder umfassen beispielsweise Druckwerte und/oder Strömungsgeschwindigkeitswerte.

An dieser Stelle sei bemerkt, dass beispielsweise auch eine Anordnung von zwei oder weiteren Antriebsmotoren vorgesehen sein kann, die zur jeweiligen Erzielung der Saugleistung eingeschaltet und ausgeschaltet werden, gegebenenfalls auch zur Erhöhung ihrer Leistung oder Absenkung ihrer Leistung mit entsprechenden Saugleistungsvorgabewerten angesteuert werden.

Die Steuerung bzw. Regelung des Sauggeräts gemäß der Erfindung beobachtet sozusagen den Verlauf des Saugleistungsvorgabewerts. Wenn nämlich der Saugleistungsvorgabewert immer wieder erhöht werden muss, beispielsweise über eine erste Schwelle hinweg erhöht werden muss, damit der Regelung-Sollwert überhaupt noch erzielbar ist, deutet dies auf einen erhöhten Verbrauch, beispielsweise den Anschluss eines weiteren Saugstrom-Verbrauchers an die Saugleitung, hin. In diesem Fall erhöht die Regelung bzw. Steuerung zugleich nicht nur den Saugleistungsvorgabewert, sondern auch den Regelung-Sollwert. Diese Methode funktioniert natürlich auch umgekehrt, d.h. dass die Regelung oder Steuerung beobachtet, wenn der Saugleistungsvorgabewert wieder stufig oder kontinuierlich abgesenkt werden kann, wobei dennoch der Regelung-Sollwert erzielbar ist, und die Regelung oder Steuerung dann den Regelung-Sollwert ebenfalls absenkt. Wenn also z.B. der vorgenannte zusätzliche Saugstrom-Verbraucher nicht mehr angeschlossen ist, arbeitet das Sauggerät sparsam und senkt den Regelung-Sollwert wieder.

Die erfindungsgemäße Saugleitung Adaption bzw. optimierte Regelung der Strömungsgeschwindigkeit kann zwar den Effekt haben, dass das Sauggerät sparsam arbeitet, also nicht mit überhöhter Leistung oder zu geringer Leistung, aber auch den Effekt, dass für den jeweiligen Saugstrom-Verbraucher eine optimal angepasste Saugleistung bzw. Strömungsgeschwindigkeit bereitgestellt wird. Am Ort des Verbrauchs wird also beispielsweise nicht mit zu großer Kraft oder mit zu wenig Kraft gesaugt.

Der Schmutzsammelraum ist z.B. in einem Schmutzsammelbehälter vorgesehen. Oberhalb des Schmutzsammelbehälters oder zwischen dem Saugaggregat und dem Schmutzsammelraum ist die Filteranordnung oder ein Teil davon angeordnet. Es ist zum Beispiel möglich, dass Staub in dem Schmutzsammelbehälter oder Schmutzsammelraum gesammelt und entsorgt wird, wenn der Schmutzsammelbehälter voll ist. Die Filteranordnung als Ganzes oder jedenfalls das oder die oberhalb des Schmutzsammelbehälters angeordnete Filterelemente werden von Zeit zu Zeit, wenn das jeweilige Filterelement mit Schmutzpartikeln zugesetzt ist, abgereinigt. Ein zwischen dem Saugaggregat und dem Schmutzsammelraum angeordnetes Filterelement umfasst z.B. eine Filterpatrone, ein Faltenfilter oder dergleichen.

Es ist auch möglich, dass in dem Schmutzsammelraum ein Filterbeutel angeordnet ist, der dann die Filteranordnung zumindest teilweise darstellt, d.h. beispielsweise ein Filterelement der Filteranordnung darstellt. Es können weitere Filter vorgesehen sein, beispielsweise ein dem Saugaggregat vorgelagerter Vorfilter (z.B. ein Faltenfilter), der auch dann vorgesehen sein kann, wenn ein Filterbeutel oder Staubsack verwendet wird.

Das Saugaggregat umfasst beispielsweise einen Seitenkanalverdichter. Selbstverständlich könnte auch jede andere Art einer Saugturbine einen Bestandteil des Saugaggregats bilden.

Das Sauggerät ist beispielsweise während der Durchführung des Verfahrens mit einer Saugleitung mit mindestens zwei Verbraucher-Anschlüssen zum Anschluss von Verbrauchern des Saugstroms verbunden. Das Sauggerät verändert in Abhängigkeit von der Anzahl der an die Saugleitung angeschlossenen Verbrauchern den Regelung-Sollwert, so dass an jedem durch einen Verbraucher genutzten Verbraucher-Anschluss der Saugleitung eine Mindest-Strömungsgeschwindigkeit des Saugstroms vorhanden ist. Die Steuerungseinrichtung ist also vorteilhaft zur Änderung des Regelung-Sollwerts in Abhängigkeit von der Anzahl der an die Saugleitung angeschlossenen Verbrauchern ausgestaltet, so dass an jedem durch einen Verbraucher genutzten Verbraucher-Anschluss der Saugleitung eine Mindest-Strömungsgeschwindigkeit des Saugstroms vorhanden ist.

Die Saugleitung kann also beispielsweise von einem Schlauch gebildet sein, an den über einen Verzweig-Anschluss, zum Beispiel ein sogenanntes Y-Element, ein erster und ein zweiter Verbraucher angeschlossen sind. Das Sauggerät gemäß der Erfindung adaptiert sich sozusagen von selbst an den jeweilige, z.B. erhöhten oder geringeren, Verbrauch. Aber auch bei stationären Anlagen ist es üblich, dass wahlweise an die Saugleitung, die beispielsweise ein stationär angebrachtes Rohr umfasst, mehr oder weniger Saugstrom-Verbraucher angeschlossen werden.

Die Steuerungseinrichtung ist zweckmäßigerweise zur Änderung des Regelung-Sollwerts in Abhängigkeit von einem Querschnitt der Saugleitung ausgestaltet. Vorteilhaft ist vorgesehen, das Sauggerät den Regelung-Sollwert abhängig von einem Querschnitt der Saugleitung verändert. Wenn also beispielsweise eine Saugleitung mit einem größeren Querschnitt angeschlossen wird, stellt sich die Steuerung oder Regelung des Sauggeräts darauf ein und erhöht beispielsweise den Regelung-Sollwert. Eine manuelle Einstellung am Sauggerät, mit der die Saugleistung angehoben oder abgesenkt wird, um eine Mindest-Strömungsgeschwindigkeit beispielsweise aus Gründen der Arbeitssicherheit einzuhalten, ist dann zwar noch immer möglich, jedoch nicht unbedingt erforderlich.

Eine Korrelation zwischen Durchmesser der Saugleitung (Saugleitungsdurchmesser) und der Absauggeschwindigkeit bei 20 m/s lautet beispielsweise wie folgt:

| Saugleitungsdurchmesser [mm] | Querschnittsfläche [dm²] | Volumenstrom [l/s] |
|---|---|---|
| 22 | 0,04 | 7,60 |
| 27 | 0,06 | 11,45 |
| 32 | 0,08 | 16,08 |
| 36 | 0,10 | 20,36 |
| 50 | 0,20 | 39,27 |

Der Saugleistungsvorgabewert kann verschiedene Werte umfassen, beispielsweise einen Drehzahlwert zur Einstellung einer Drehzahl des Antriebsmotors. Der Saugleistungsvorgabewert kann aber auch einen Stromwert und/oder einen Spannungswert zur Einstellung einer elektrischen Leistung des Antriebsmotors (Strom und/oder Spannung) umfassen. Mit dem Drehzahlwert kann auch beispielsweise ein Frequenzwert gemeint sein, der eine Ansteuerungsfrequenz des Antriebsmotors betrifft. Selbstverständlich kann auch auf anderem Wege die Saugleistung vorgegeben werden, d.h. dass beispielsweise eine Drosselklappe geöffnet oder geschlossen wird, dass Antriebsmotoren kaskadenartig zugeschaltet oder abgeschaltet werden oder dergleichen.

Es ist beispielsweise möglich, dass der Saugleistungsvorgabewert eine Kombination mehrerer der vorgenannten Vorgabeparameter ist oder umfasst, d.h. dass beispielsweise die Steuerungseinrichtung an ihrem Ausgang beispielsweise eine Kombination aus einzustellender Drehzahl und einzustellen Stromwert ausgibt. Passende Vorgabeparameterkombinationen für den Saugleistungsvorgabewert können beispielsweise in einer Tabelle oder einem Speicher der Steuerungseinrichtung abgelegt sein.

Die Sensoranordnung kann einen Strömungssensor zur Erfassung einer Strömungsgeschwindigkeit des Saugstroms umfassen, beispielsweise im Bereich des Anschlusses für die Saugleitung.

Die Sensoranordnung umfasst zweckmäßigerweise mindestens einen Drucksensor zur Erfassung eines von dem Saugstrom abhängigen Druckwerts. Z.B. ist zuströmseitig der Filteranordnung oder des Filters, d.h. zwischen dem mindestens einen, dem Saugaggregat vorgelagerten Filter und dem Schmutzsammelraum, ein Drucksensor vorgesehen. Es kann aber auch abströmseitig ein Drucksensor vorgesehen sein, das heißt zwischen dem mindestens einen oder einem dem Saugaggregat vorgelagerten Filterelement und dem Saugaggregat.

Die beiden vorgenannten Drucksensoren stellen beispielsweise erste und zweite Drucksensoren dar, die einen ersten und einen zweiten Druckwert bilden. Eine Differenz zwischen den beiden Druckwerten ist ein Indikator dafür, inwieweit ein Filterelement zwischen den Drucksensoren bereits mit Partikeln zugesetzt ist bzw. zur Abreinigung ansteht. Eine derartige Differenzdruck-Ermittlung wird im Rahmen der Erfindung vorteilhaft zusätzlich genutzt, beispielsweise zur Ermittlung einer kritischen Situation.

Der erste Druckwert oder der zweite Druckwert können als Indikatoren für den Regelung-Istwert dienen, beispielsweise den Regelung-Istwert darstellen oder zu dessen Bildung herangezogen werden.

Eine Variante der Erfindung kann vorsehen, dass die Steuerungseinrichtung den Regelung-Sollwert maximal bis zum Erreichen eines oberen Grenzwerts mindestens einer Messgröße, beispielsweise eines abströmseitig des Filters zum Saugaggregat hin erfassten, oben als zweiten Druckwert bezeichneten Druckwerts, erhöht. Wenn also beispielsweise abströmseitig, zum Saugaggregat hin, immer größere Unterdruck-Werte auftreten, das heißt dass mit immer stärkerer Kraft gesaugt wird, können Beschädigungen auftreten. Der Regelung-Sollwert wird dann quasi aus Sicherheitsgründen, um Beschädigungen zu vermeiden, nicht weiter erhöht, obwohl dies vielleicht zuströmseitig des Filters, dort wo z.B. der vorgenannte erste Druckwert erfasst wird, durchaus noch sinnvoll sein könnte, um die Strömungsgeschwindigkeit des Saugstroms aufrecht zu erhalten.

Die Steuerungseinrichtung ist zweckmäßigerweise zur Erzeugung einer Warnung und/oder zum Abschalten des Sauggeräts ausgestaltet, wenn ein maximaler Differenzdruck zwischen einem ersten zuströmseitig des Filters erfassten Druckwert und einem zweiten abströmseitig des Filters erfassten Druckwert ermittelt wird. Wenn also die Saugleistung immer höher wird, d.h. abströmseitig des Filters oder der Filteranordnung ein immer größer werdender Unterdruck (entsprechend dem zweiten Druckwert) festzustellen ist und der am Filter zuströmseitig gemessene (erste) Druckwert konstant bleibt oder abfällt, wird die Druckdifferenz, die über den Filter hinweg herrscht, immer größer. Dies ist jedoch ein Indikator dafür, dass zuströmseitig die Strömungsgeschwindigkeit immer weiter abnimmt und unter einen kritischen Wert fallen könnte, so dass die Steuerung dann das Sauggerät vorteilhaft abschaltet oder eine Warnung ausgibt oder beides.

Es kann aber auch vorgesehen sein, dass die Steuerung bei einem Unterschreiten eines minimalen zuströmseitigen Druckwerts bereits das Sauggerät abschaltet oder die Warnung ausgibt, d.h. dass beispielsweise nur der erste Druckwert überwacht wird. Wenn nämlich der zuströmseitig des Filters erfasste (erste) Druckwert abnimmt, ist dies ein Indikator dafür, dass eine Strömungsgeschwindigkeit, die z.B. aus Gründen des Arbeitsschutzes erforderlich ist, nicht mehr erreicht wird.

Der Saugleistungsvorgabewert kann von der Steuerung selbst erfasst werden, beispielsweise weil die Steuerung ja sozusagen selbst weiß, welche Saugleistung sie dem Saugaggregat vorgibt.

Möglich ist aber auch ein Vorgabewert-Sensor zur Erfassung des Saugleistungsvorgabewerts vorhanden. Z.B. ist es möglich, dass dem Saugaggregat ein Drehzahlsensor oder Frequenzsensor zugeordnet ist, der die Drehzahl oder Frequenz des Saugaggregats bzw. des Antriebsmotors erfasst. Es können selbstverständlich auch Strom und Spannung als Messwerte erfasst werden, beispielsweise über einen Shunt, über den der den Antriebsmotor speisende Strom gemessen wird, so dass auf diesem Weg sensorisch der Saugleistungsvorgabewert erfasst wird. Selbstverständlich ist es auch möglich, dass der Saugleistungsvorgabewert aus mehreren Werten gebildet wird, beispielsweise Drehzahl und Stromaufnahme des Antriebsmotors.

Das Sauggerät kann, wie gesagt, ein mobiles Sauggerät sein, beispielsweise ein Baustellen-Sauggerät, aber auch ein stationäres Sauggerät.

An der Saugleitung kann ein Spülventil vorgesehen sein, beispielsweise an einem freien, vom Sauggerät entfernten Ende der Saugleitung.

Es ist möglich, dass die Steuerungseinrichtung oder die Regelungseinrichtung den Regelung-Sollwert sozusagen kontinuierlich nachführt. Beispielsweise ist es möglich, dass die Steuerungseinrichtung den Regelung-Sollwert proportional mit dem jeweils notwendigen Saugleistungsvorgabewert erhöht oder absenkt. Eine zweckmäßigerweise vorgesehene Lösung sieht jedoch vor, dass das Sauggerät den Regelung-Sollwert stufig in Abhängigkeit von mindestens einem Grenzwert, den der Saugleistungsvorgabewert überschreitet oder unterschreitet, vergrößert oder verkleinert. Somit wird vorzugsweise ein ruhiges, gleichmäßiges Regelungsverhalten erzielt.

Die Steuerungseinrichtung des Sauggeräts kann beispielsweise einen Mikroprozessor umfassen. Das erfindungsgemäße Verfahren kann beispielsweise durch Programmcode gebildet sein, der von dem Mikroprozessor ausgeführt wird. Der Programmcode ist in einem Speicher der Steuerungseinrichtung gespeichert. Im Rahmen der Erfindung liegt also auch ein Programmmodul, das Programmcode enthält, das bei Ausführung durch einen Prozessor die erfindungsgemäßen Verfahrensschritte bei einem Sauggerät ermöglicht.

Nachfolgend wird ein Ausführungsbeispiel der Erfindung anhand der Zeichnung erläutert. Es zeigen:
- Figur 1: eine Frontalansicht auf eine stationäre Sauganlage umfassend ein Sauggerät gemäß der Erfindung, das in
- Figur 2: detaillierter dargestellt ist,
- Figur 3: ein Diagramm, aus dem die Anpassung des Regelung-Sollwerts in Abhängigkeit des Saugleistungsvorgabewerts dargestellt ist,
- Figur 4: einen Diagramm zur Veranschaulichung einer Sicherheitsfunktion bzw. Abschaltefunktion des Sauggeräts gemäß Figuren 1 und 2, und
- Figur 5: ein Schaltbild einer Regelung des Sauggeräts gemäß Figuren 1 und 2,
- Figur 6: eine Frontalansicht auf eine mobile Sauganlage umfassend ein mobiles Sauggerät gemäß der Erfindung.

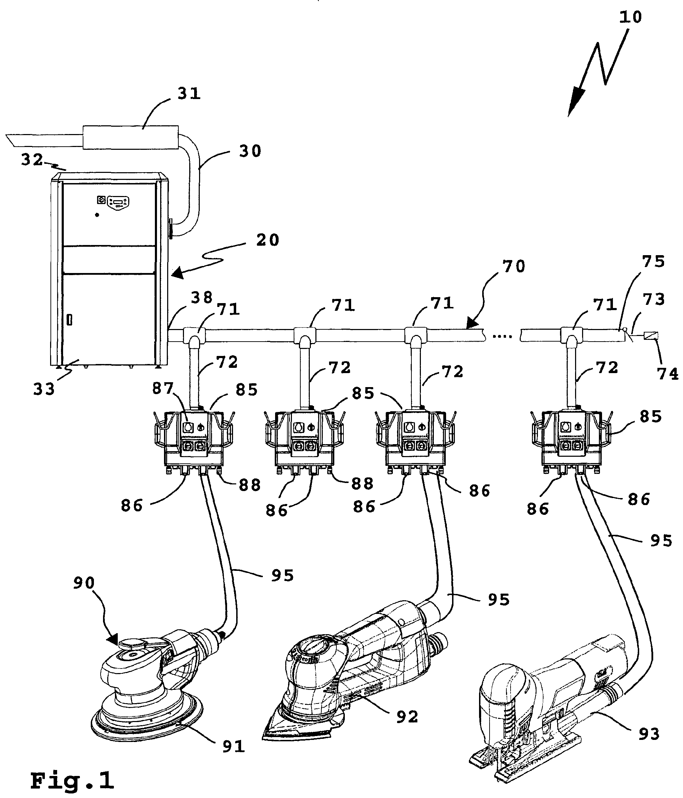

Eine in Figur 1 dargestellte stationäre Sauganlage 10 umfasst ein Sauggerät 20 gemäß der Erfindung, an das eine Saugleitung 70 angeschlossen ist.

Die Saugleitung 70 hat mehrere Verzweigungen 71, z.B. T-Stücke, von denen Stichleitungen 72 abzweigen. An die Stichleitungen 72 ist jeweils eine Anschlusseinheit 85 angeschlossen, die jeweils 2 Verbraucher-Anschlüsse 86 aufweist. An die Anschlusseinheiten 85 können auch beispielsweise elektrische Verbraucher angeschlossen werden, zum Beispiel an Steckdosen 87. Ferner sind Druckluft-Anschlüsse 88 für Druckluft vorhanden. Exemplarisch sind an die Anschlusseinheiten 85 beispielsweise Saugstrom-Verbraucher 90, zum Beispiel Schleifgeräte 91 und 92 sowie eine Stichsäge 93 angeschlossen, wobei selbstverständlich auch andere Geräte möglich sind, beispielsweise Kreissägen oder auch flexible Schläuche, mit denen an einem Arbeitsort direkt abgesaugt werden kann, wo die Verbraucher 90 eingesetzt werden. Die Verbraucher 90 sind beispielsweise über Schlauchleitungen 95 mit den Anschlusseinheiten 85 verbunden.

Am von dem Sauggerät 20 entfernten, sozusagen freien Ende der Saugleitung 70 ist ein Spülventil 73 angeordnet, mit dem die Saugleitung 70 durchspülbar ist. Das Spülventil 73 umfasst beispielsweise eine Klappe. Das Spülventil 73 ist durch einen Ventilantrieb 74 antreibbar.

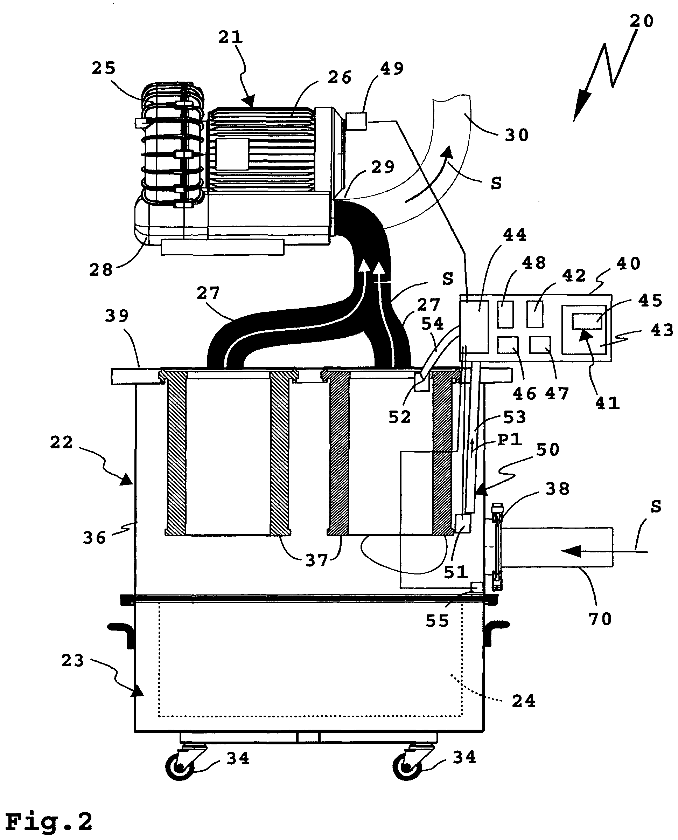

Das Sauggerät 20 umfasst beispielsweise ein Saugaggregat 21 (Figur 2), das oberhalb einer Filteranordnung 22 und einem Schmutzsammelbehälter 23, in dem ein Schmutzsammelraum 24 vorgesehen ist, angeordnet ist. Das Saugaggregat 21 umfasst beispielsweise einen sogenannten Seitenkanalverdichter 25, der exemplarisch für jede andere Saugturbine stehen kann. Der Seitenkanalverdichter 25 wird von einem Antriebsmotor 26, zum Beispiel einem elektrischen Motor, angetrieben. Der Antriebsmotor 26 umfasst beispielsweise einen elektronisch kommutierten Antriebsmotor, einen Asynchronmotor, einen Reihenschlußmotor oder dergleichen.

Das Saugaggregat 21 ist anhand von Saugleitungen 27 mit der Filteranordnung 22 strömungsverbunden, d.h. ein vom Saugaggregat 21 erzeugter Saugstrom S strömt über die Saugleitungen 27 von der Filteranordnung 22 zum Saugaggregat 21, dort allerdings zunächst in einen Schalldämpfer 28, der dem Seitenkanalverdichter 25, also der Saugturbine, vorgelagert ist.

Der Saugstrom S wird über einen Auslass 29 aus dem Saugaggregat 21 ausgestoßen, an welchen eine Leitung 30 angeschlossen ist, die den Auslass 29 mit einem Abluftschalldämpfer 31 verbindet. Vom Abluftschalldämpfer 31 strömt der Saugstrom S in die Umgebung aus. Es kann auch nur ein Schalldämpfer 28 oder 31 oder auch kein Schalldämpfer vorgesehen sein.

Das Saugaggregat 21 umfasst ein Gehäuse 32, in welchem das Saugaggregat 21 angeordnet ist sowie zudem die Filteranordnung 22 und der Schmutzsammelbehälter 23. Das Gehäuse 32 hat einen oder mehrere Deckel 33, die geöffnet werden können, so dass die vorgenannten, im Innenraum des Gehäuses 32 angeordneten Komponenten zugänglich sind. Die Deckel 33 umfassen beispielsweise Klappen, Türen oder dergleichen.

Der Schmutzsammelbehälter 23 ist mittels Rollen 34 auf einem Untergrund rollbar. Der Schmutzsammelbehälter 23 ist beispielsweise in der Art eines fahrbaren Topfs ausgestaltet, worauf es jedoch vorliegend nicht ankommt. Wenn der Schmutzsammelbehälter 23 mit Partikeln gefüllt ist, kann er nach Öffnen eines oder mehrerer der Deckel 33 aus dem Gehäuse 32 heraus gefahren und entleert werden.

Oberhalb des Schmutzsammelbehälters 23 ist die Filteranordnung 22 angeordnet. Die Filteranordnung 22 umfasst einen Filterträger 36. Der Filterträger 36 kann auf den Schmutzsammelbehälter 23 aufgesetzt werden. Der Filterträger 36 trägt an seiner oberen Deckwand 39 mehrere Filterpatronen, die Filterelemente 37 darstellen. Die Filterelemente 37 sind also bezogen auf den Saugstrom S zwischen dem Schmutzsammelraum 24 und dem Saugaggregat 21 angeordnet. Von Zeit zu Zeit werden die Filterelemente 37 abgereinigt, das heißt wenn sie mit Partikeln zugesetzt sind. Das ist jedoch vorliegend nicht im Vordergrund.

Am Filterträger 36 ist ein Saugeinlass 38 vorgesehen, über den der Saugstrom S in den Innenraum des Filterträgers 36 bzw. den Schmutzsammelraum 24 einströmen kann. Selbstverständlich könnte der Saugeinlass 38 auch am Schmutzsammelbehälter 23 vorgesehen sein.

An die Saugleitung 70 können also unterschiedlich viele der Verbraucher 90 angeschlossen werden, d.h. in der Zeichnung sind exemplarisch 8 Verbraucher-Anschlüsse 86 angedeutet, von denen nur 3 genutzt werden. Weiterhin wäre es an sich strömungstechnisch günstig, wenn der Querschnitt der Saugleitung 70 in der Zeichnung von links nach rechts, das heißt vom Saugeinlass 38 des Sauggeräts 20 her in Richtung des freien Endes, wo das Spülventil 73 angeordnet ist, kleiner wird.

Damit an jedem der Verbraucher-Anschlüsse 86 eine Mindest-Strömungsgeschwindigkeit des Saugstroms S gewährleistet ist, was aus Gründen der Arbeitssicherheit, aus ergonomischen Gründen und dergleichen anzustreben ist, müsste an sich an den Anschlusseinheiten 85, jedenfalls an zumindest jeweils einem der Verbraucher-Anschlüsse 86, ein Strömungssensor, zumindest aber ein Drucksensor angebracht sein. Man erkennt, dass dies äußerst umständlich wäre, so dass man in der Praxis derartige Sensoren nicht vorsieht, sondern bei an sich bekannten Sauganlagen die Leistung des Sauggeräts so hoch einstellt, dass auch am Verbraucheranschluss, der beispielsweise am weitesten vom Sauggerät entfernt ist, dennoch eine ausreichende Saugleistung und Strömungsgeschwindigkeit des Saugstroms vorhanden ist.

Die Sauganlage 10 gewährleistet auch ohne eine derartig aufwändige Sensorik einen optimalen Saugbetrieb, unabhängig davon, wie viele Verbraucher 90 angeschlossen sind und wie die Qualität der Saugleitung 70 ist bzw. welchen Querschnitt diese hat. Dazu ist das Sauggerät 20 in erfindungsgemäßer Weise ausgestaltet.

Das Sauggerät 20 weist eine Steuerungseinrichtung 40 mit Regelungsmitteln 41 auf. Die Steuerungseinrichtung 40 umfasst beispielsweise einen Prozessor 42, der zur Ausführung von Programmen, beispielsweise des Programmcodes eines Programmmoduls 45, das in einem Speicher 43 abgelegt ist, ausgestaltet ist. Die Steuerungseinrichtung 40 kommuniziert mit einer E/A-Schnittstelle 44 mit den übrigen Komponenten des Sauggeräts 20. Über die E/A-Schnittstelle 44 kann die Steuerungseinrichtung 40 beispielsweise den Antriebsmotor 26 des Saugaggregats 21 ansteuern, d.h. anhand eines Saugleistungsvorgabewerts SV die Leistung des Saugaggregat 21 einstellen. Bei dem Saugleistungsvorgabewert SV handelt es sich beispielsweise um einen Stromwert, einen Frequenzwert oder eine Kombination aus derartigen Werten. Mithin muss also der Saugleistungsvorgabewert SV nicht unbedingt ein einzelner Wert sein, sondern könnte auch mehrere Werte umfassen.

Weiterhin ist die Steuerungseinrichtung 40 über E/A-Schnittstelle 44 mit einer Sensoranordnung 50 verbunden. Die Sensoranordnung 50 umfasst beispielsweise einen Drucksensor 51, der zuströmseitig der Filterelemente 37 angeordnet ist, d.h. der Drucksensor 51 erfasst und meldet der Steuerungseinrichtung 40 einen Druckwert P1. Beispielsweise ist der Drucksensor 51 in einem Gehäuse der Steuerungseinrichtung 40 verbunden und über eine Leitung 53 mit dem Schmutzsammelraum 24, verbunden. Es besteht allerdings auch die Möglichkeit, dass die Leitung 53 nicht etwa ein Schlauch ist, sondern zum Beispiel auch eine elektrische Leitung, d.h. dass der Drucksensor 51 vor Ort direkt im oder oberhalb des Schmutzsammelraums 24, das heißt zuströmseitig der Filteranordnung 22, angeordnet ist.

Im Prinzip ähnlich verhält es sich mit einem weiteren Drucksensor 52, sozusagen einem zweiten Drucksensor, der über eine Leitung 54 oder einen Schlauch, der abströmseitig der Filteranordnung 22 ausmündet, mit der Abströmseite der Filteranordnung 22 verbunden. Der zweite Drucksensor 52 kann also ebenfalls einen Bestandteil der Steuerungseinrichtung 40 bilden und mit der Abströmseite der Filteranordnung 22 kommunizieren. Der zweite Drucksensor 52 kann aber kann sich aber auch direkt zwischen der Filteranordnung 22 und dem Saugaggregat 21 befinden, beispielsweise indem dort ein entsprechendes Sensor-Bauelement angeordnet wird. Der zweite Drucksensor erfasst den Druck auf der Abströmseite der Filteranordnung 22 und erzeugt einen zweiten Druckwert P2.

Eine Druckdifferenz der Druckwerte P1 und P2 wird nachfolgend als Differenzdruck DP bezeichnet und ist ein Indikator dafür, inwieweit die Filterelemente 37 verschmutzt sind, beispielsweise dann also abzureinigen sind. Aber auch für eine Sicherheitsfunktion und Regelungsfunktion ist der Differenzdruck DP eine von der Steuerungseinrichtung 40 berücksichtigte Größe.

Die Sensoranordnung 50 kann auch einen Strömungssensor 55 umfassen, der z.B. eine Strömungsgeschwindigkeit des Saugstroms S am Saugeinlass 38 und mit der Steuerungseinrichtung 40 verbunden ist.

Die Regelungsmittel 41, die beispielsweise von der Steuerungseinrichtung 40 zumindest teilweise dadurch realisiert werden, dass der Prozessor 42 das Programmmodul 45 ausführt, bei dessen Ausführung die Schritte des erfindungsgemäßen Verfahrens durchgeführt werden, regeln die Leistung des Saugaggregats 21 anhand eines Druckwerts, der im Schmutzsammelraum 24, jedenfalls zuströmseitig der Filteranordnung 22 vorliegt, z.B. des Druckwerts P1.

Beispielsweise ist der Druckwert P1 ein Indikator für die Strömungsgeschwindigkeit bzw. den Volumenstrom VOL.

Die Regelungsmittel 41 regeln also den Druck P1 anhand des ersten Druckwerts P1, der einen Regelung-Istwert darstellt (P1ist). Korrelierend dazu ist ein Regelung-Sollwert P1soll.

Der Regelung-Sollwert P1soll wird beispielsweise auf einen Mindestwert oder Startwert festgelegt, wenn die Sauganlage 10 in Betrieb geht. Beispielsweise liegt ein Startwert oder Mindestwert P1solla für den Regelung-Sollwert P1soll bei 110 mbar.

Ein Basiswert oder Startwert P1sollstart des Regelung-Sollwerts P1soll kann z.B. in dem Programm 45 definiert sein und/oder über eine Konfigurationsschnittelle 48 konfigurierbar sein, z.B. über eine USB-Schnittstelle, und/oder anhand eines Stellelements 47 einstellbar sein.

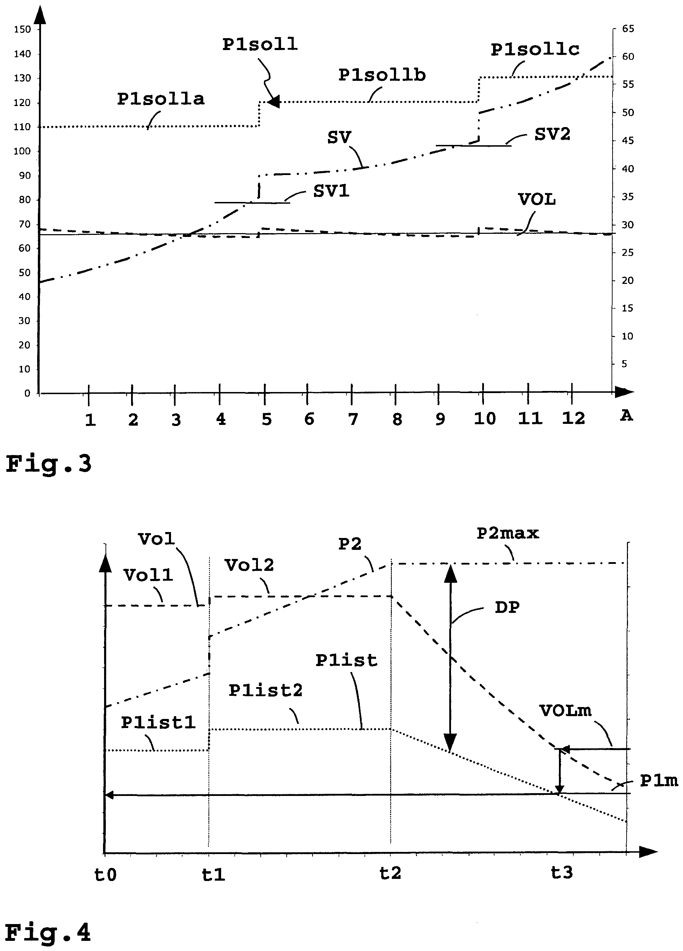

Die Regelungsmittel 41 erhöhen oder senken den Saugleistungsvorgabewert SV so, dass der Regelung-Istwert P1ist den Regelung-Sollwert P1soll erreicht. Bei einer Anzahl A genutzter Verbraucher-Anschlüsse 68 bis maximal 5 muss der Saugleistungsvorgabewert SV kontinuierlich angehoben werden, was aus Figur 3 hervorgeht. Bei 5 genutzten Verbraucher-Anschlüssen 68 erreicht der Saugleistungsvorgabewert SV, beispielsweise ein Stromwert zur Ansteuerung des Antriebsmotors 26, einen ersten Schwellwert oder Grenzwert SV1.

Es ist möglich, dass die Steuerungseinrichtung 40 den Saugleistungsvorgabewert SV sozusagen selbst kennt, weil sie ihn dem Antriebsmotor 26 vorgibt. Es ist aber auch möglich, dass die Steuerungseinrichtung 40 den Saugleistungsvorgabewert SV anhand eines Vorgabewert-Sensors 49 erfasst, beispielsweise eines Drehzahlsensors zur Erfassung der Drehzahl des Saugaggregats 21 oder einen Stromsensor zur Erfassung eines Stroms, mit dem der Antriebsmotor 26 betrieben wird. Es ist beispielsweise möglich, dass die Steuerungseinrichtung 40 oder die Regelungsmittel 41 eine Höhe des Stroms vorgegeben, mit dem der Antriebsmotor 26 betrieben wird und der Vorgabewert-Sensor 43 die sich daraufhin einstellende Drehzahl des Saugaggregats 21 erfasst, das heißt dass sozusagen der Saugleistungsvorgabewert SV an sich ein Stromwert ist, während die Adaption des Regelung-Sollwerts P1soll auf den Drehzahlwert des Saugaggregat 21 bezogen ist.

Die Steuerungseinrichtung 40 adaptiert sich dann, d. h. bei Erreichen eines Schwellwerts SV 1, an die neuen Gegebenheiten, d.h. zur Bereitstellung einer Mindest-Strömungsgeschwindigkeit des Saugstroms S an jedem der bereits genutzten Anschlüsse 86 sowie gegebenenfalls weiteren, später noch genutzten Verbraucher-Anschlüssen 86, erhöht die Steuerungseinrichtung 40 den Regelung-Sollwert P1soll auf einen neuen Wert P1sollb. Bis zu weiteren 5 genutzten Verbraucher-Anschlüssen 86, insgesamt also 10 Verbraucher-Anschlüssen 86 reicht diese Maßnahme aus, um eine Mindest-Strömungsgeschwindigkeit des Saugstroms S an jedem der Verbraucher-Anschlüsse 86 bereitzustellen. Die Steuerungseinrichtung 40 passt den Saugleistungsvorgabewert S entsprechend an, damit der gemessene erste Druckwert P1 auf den einzustellenden Druckwert P1sollb, den Regelung-Sollwert geregelt ist.

Bei Erreichen eines weiteren Grenzwerts oder Schwellwerts SV2 wird der Regelung-Sollwert P1soll auf einen P1sollc erhöht, um die weiteren dann zu bedienenden Verbraucher-Anschlüsse 86 mit ausreichendem Volumenstrom VOL zu versorgen bzw. eine Mindest-Strömungsgeschwindigkeit des Saugstroms S zu gewährleisten.

In dem Diagramm gemäß Figur 3 erkennt man, dass der Volumenstrom VOL im Bereich eines oder mindestens eines der Verbraucher-anschlüsse 86 nahezu konstant bleibt, d.h. der Volumenstrom VOL nimmt jeweils mit einer Anzahl weiterer genutzter Zapfstellen oder Verbraucher-Anschlüsse 86 etwas ab, wird jedoch dann wieder erhöht, wenn die Regelungsmittel 41 den Regelung-Sollwert P1soll adaptieren, beispielsweise erhöhen, oder was selbstverständlich ebenfalls sinnvoll und richtig ist, den Regelung-Sollwert P1soll absenken, wenn weniger der Verbraucher-Anschlüsse 86 genutzt werden.

In dem Diagramm gemäß Figur 3 ist die Adaption des Regelung-Sollwert P1soll auf die Anzahl genutzter Verbraucher-Anschlüsse 86 bezogen. Selbstverständlich funktioniert diese Anpassung an die jeweilige Saugleistung, die quasi an der Saugleitung 70 gefordert wird, nicht nur bezogen auf die Anzahl genutzter Anschlüsse 86, sondern auch bezogen auf die jeweils an einem Anschluss 86 verlangte Saugleistung. Wenn also beispielsweise ein Verbraucher-Anschluss 86 stärker belastet wird, hebt die Steuerungseinrichtung 40 den Regelung-Sollwert P1soll automatisch an oder senkt ihn auch ab, wenn der Verbraucher-Anschluss 86 weniger stark belastet ist.

Ebenfalls vorteilhaft ist die Adaption des Regelung-Sollwerts P1soll auch dafür, dass bei zunehmender Verschmutzung der Filteranordnung 22 ein zumindest ausreichender Volumenstrom VOL des Saugstroms S bereitgestellt wird. Die Situation wird insbesondere auch anhand des Diagramms gemäß Figur 4 deutlich.

Zu einem Zeitpunkt t0 wird angenommen, dass die Filteranordnung 22 frisch ist, also noch nicht mit Partikeln verschmutzt, beispielsweise weil sie vorher ausgetauscht worden ist oder durch eine Abreinigung wieder sauber ist. Der Volumenstrom VOL hat beispielsweise einen Wert Voll, wenn zunächst 5 Verbraucher-Anschlüsse 86 genutzt werden. Der Unterdruck vor der Turbine bzw. dem Saugaggregat 21, das heißt abströmseitig des Filters, jedenfalls der Druckwert P2, steigt zwischen dem Zeitpunkt t0 und einem Zeitpunkt t1 an, weil nämlich wegen der zunehmenden Verschmutzung der Filteranordnung 22 die Leistung des Saugaggregat 21 erhöht werden muss. Auf diesem Wege wird jedenfalls sichergestellt, dass der Volumenstrom VOL etwa konstant bei einem Wert VOL 1 bleibt.

Zum Zeitpunkt t2 erhöht die Steuerungseinrichtung 40 beispielsweise aufgrund eines weiteren genutzten Verbraucher-Anschlusses 86 oder einer erhöhten Nachfrage nach Saugleistung bei den Verbrauchern 90 den Regelung-Sollwert P1soll, beispielsweise auf den Wert P1sollb. Der Volumenstrom VOL steigt dann an, hat also beispielsweise einen Wert VOL2. Um diesen Volumenstrom VOL 2 bzw. den Unterdruck im Schmutzsammelraum 24 aufrechtzuerhalten, das heißt den Druckwert P1 oder den Regelung-Sollwert P1soll zu erreichen, hebt das Regelungsmittel 41 den Saugleistungsvörgabewert SV weiter bis zu einem Zeitpunkt t2 an.

Zum Zeitpunkt t2 erreicht der zweite Druckwert P2 einen maximalen Wert P2max, also einen maximalen Unterdruck gegenüber der Atmosphäre. Darunter darf der Unterdruck vor dem Saugaggregat 21 nicht mehr abfallen, also betragsmäßig größer werden, damit das Saugaggregat 21 und insgesamt das Sauggerät 20 nicht beschädigt wird. Man erkennt, dass der erste Druckwert P1 im Schmutzsammelraum 24 nach dem Zeitpunkt t2 bis zu einem Zeitpunkt t3 abfällt. Dann unterschreitet der erste Druckwert P1 eine untere Grenze P1m, worauf dann die Steuerungseinrichtung 40 das Saugaggregat 21 aus Sicherheitsgründen abschaltet. Die Filteranordnung 22 ist dann derart verschmutzt, dass auch der Volumenstrom VOL einen unteren Grenzwert VOLm unterschritten hat.

Es ist auch möglich, dass die Steuerungseinrichtung 40 dann über eine Warneinrichtung 46, beispielsweise eine Leuchte, einen Lautsprecher oder dergleichen, eine Warnung ausgibt.

Die Steuerungseinrichtung 40 könnte selbstverständlich auch die Druckdifferenz DP überwachen und zum Zeitpunkt t3 feststellen, dass ein Maximum der Druckdifferenz DP erreicht ist.

An der Steuerungseinrichtung 40 könnte auch eine Stelleinrichtung 47, beispielsweise ein Drehschalter, ein Display oder dergleichen, vorgesehen sein, um den Regelung-Sollwert P1soll zu beeinflussen, beispielsweise zu erhöhen oder abzusenken. Die Steuerungseinrichtung 40 nimmt den Regelung-Sollwert P1sollstart, der beispielsweise an der Stelleinrichtung 47 einstellbar ist, beispielsweise als Startwert zur Einstellung des Regelung-Sollwert P1soll und passt diesen entsprechend an, wenn mehr oder weniger Saugleistung gefordert ist.

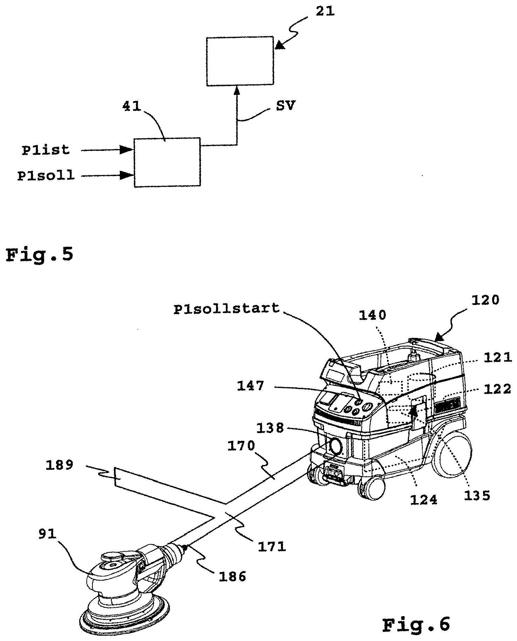

Ein in Figur 6 dargestelltes Sauggerät 120 ist ein mobiles Sauggerät, das z.B. mit Rollen auf einem Untergrund verfahrbar und/oder tragbar ist. Das Sauggerät 120 hat ein Saugaggregat 121, z.B. eine Glockenturbine. Eine Filteranordnung 122 umfasst z.B. einen zwischen einem Schmutzsammelraum 124 des Sauggeräts 120 und dem Saugaggregat 121 angeordneten Vorfilter 135, z.B. einen Faltenfilter. Zwischen dem Vorfilter 135 und dem Schmutzsammelraum 124 ist z.B. der bereits erläuterte Drucksensor 51 angeordnet (nicht dargestellt).

An einen Saugeinlass 138 ist eine flexible Saugleitung 170 mit einer Verzweigung 171, z.B. einem Y-Stück, angeschlossen. An einen Verbraucher-Anschluss 186 ist ein Verbraucher 90, z.B. das Schleifgerät 91, angeschlossen, während ein anderer Verbraucher-Anschluss 189 z.B. zum Absaugen von neben dem Schleifgerät 91 anfallendem Staub dient.

Nun kann einer der Steuerungseinrichtung 40 entsprechenden Steuerungseinrichtung 140 an einer Stelleinrichtung 147 ein Regelung-Sollwert P1soll vorgegeben werden. Zweckmäßigerweise wird dort nur ein P1sollstart eingestellt. Die Steuerungseinrichtung 140 adaptiert die Saugleistung des Saugaggregats 121 in der oben beschriebenen Weise automatisch an die Anzahl der genutzten Verbraucher-Anschlüsse 186 und 189 bzw. der dort geforderten Saugleistung. Beispielsweise kann der Anschluss 189 ja auch verschlossen oder mit einem Verbraucher 90 verbunden sein.

## Patentansprüche

1. Sauggerät, insbesondere stationäres Sauggerät (20; 120), wobei das Sauggerät (20; 120) ein einen Antriebsmotor (26) umfassendes Saugaggregat (121) zur Erzeugung eines Saugstroms (S) und einen Saugeinlass (38) zum Anschluss einer Saugleitung (70; 170) aufweist, wobei dem Saugaggregat (121) eine mindestens ein Filterelement (37) aufweisende Filteranordnung (22; 122) und ein Schmutzsammelraum (24; 124) vorgelagert sind, wobei das Sauggerät (20; 120) eine Sensoranordnung (50) zur Erfassung mindestens eines eine Strömungsgeschwindigkeit (g) des Saugstroms (S) repräsentierenden Sensorwerts, insbesondere eines Druckwerts (P1, P2) und/oder eines Strömungswerts, aufweist, wobei das Sauggerät (20; 120) eine Steuerungseinrichtung (40; 140) mit Regelungsmitteln (41) zum Regeln der Strömungsgeschwindigkeit (g) des Saugstroms (S) im Bereich des Sauggeräts (20; 120) anhand eines Regelung-Sollwerts (P1soll) und eines anhand des mindestens einen Sensorwerts gebildeten Regelung-Istwerts (P1ist) aufweist,
- wobei die Regelungsmittel (41) das Saugaggregat (121) zur Einstellung seiner Saugleistung durch Vorgabe eines Saugleistungsvorgabewerts (SV) ansteuern, **dadurch gekennzeichnet,**
- **dass** die Steuerungseinrichtung (40; 140) zur Erhöhung oder Absenkung des Regelung-Sollwerts (P1soll) in Abhängigkeit von einer Erhöhung oder Absenkung des Saugleistungsvorgabewerts (SV), der zum Erreichen des Regelung-Sollwerts (P1soll) dem Saugaggregat (121) vorgegeben wird, ausgestaltet ist.

2. Sauggerät nach Anspruch 1, **dadurch gekennzeichnet, dass** es mit einer Saugleitung (70; 170) mit mindestens zwei Verbraucher-Anschlüssen (86) zum Anschluss von Verbrauchern (90) des Saugstroms (S) verbunden ist und die Steuerungseinrichtung (40; 140) zur Änderung des Regelung-Sollwerts (P1soll) in Abhängigkeit von der Anzahl der an die Saugleitung (70; 170) angeschlossenen Verbrauchern (90) ausgestaltet ist, so dass an jedem durch einen Verbraucher (90) genutzten Verbraucher-Anschluss (86) der Saugleitung (70; 170) eine Mindest-Strömungsgeschwindigkeit (g) des Saugstroms (S) vorhanden ist.

3. Sauggerät nach Anspruch 1 oder 2, **dadurch gekennzeichnet, dass** die Steuerungseinrichtung (40; 140) zur Änderung des Regelung-Sollwerts (P1soll) in Abhängigkeit von einem Querschnitt der Saugleitung (70; 170) ausgestaltet ist.

4. Sauggerät nach einem der vorhergehenden Ansprüche, **dadurch gekennzeichnet, dass** der Regelung-Sollwert (P1soll) und der Regelung-Istwert (P1ist) im Bereich des Saugeinlasses (38) und/oder dem Schmutzsammelraum (24; 124), insbesondere vor der Filteranordnung (22; 122), erfassbare physikalische Werte, insbesondere mindestens einen Druckwert (P1), sind oder umfassen.

5. Sauggerät nach einem der vorhergehenden Ansprüche, **dadurch gekennzeichnet, dass** der Saugleistungsvorgabewert (SV) einen Drehzahlwert zur Einstellung einer Drehzahl des Antriebsmotors (26) und/oder einen Stromwert oder Spannungswert zur Einstellung einer elektrischen Leistung des Antriebsmotors (26) umfasst oder ein derartiger Wert ist.

6. Sauggerät nach einem der vorhergehenden Ansprüche, **dadurch gekennzeichnet, dass** die Sensoranordnung (50) mindestens einen Strömungssensor (55) zur Erfassung einer Strömungsgeschwindigkeit (g) des Saugstroms (S) und/oder mindestens einen Drucksensor (51, 52) zur Erfassung eines von dem Saugstrom (S) abhängigen Druckwerts (P1, P2), insbesondere einen zuströmseitig des Filters angeordneten Drucksensor (51) zur Erfassung eines ersten Druckwerts (P1) und/oder einen abströmseitig des Filters zum Saugaggregat (121) hin angeordneten Drucksensor (52) zur Erfassung eines zweiten Druckwerts (P2), umfasst.

7. Sauggerät nach einem der vorhergehenden Ansprüche, **dadurch gekennzeichnet, dass** die Steuerungseinrichtung (40; 140) den Regelung-Sollwert (P1soll) maximal bis zum Erreichen eines oberen Grenzwerts mindestens einer Messgröße, insbesondere eines abströmseitig des Filters zum Saugaggregat (121) hin erfassten Druckwerts (P2) erhöht.

8. Sauggerät nach einem der vorhergehenden Ansprüche, **dadurch gekennzeichnet, dass** die Steuerungseinrichtung (40; 140) zur Erzeugung einer Warnung und/oder zum Abschalten des Sauggeräts (20; 120) bei Erreichen eines maximalen Differenzdrucks (DP) zwischen einem ersten zuströmseitig des mindestens einen Filterelements (37) erfassten Druckwerts (P1) und einem zweiten abströmseitig der Filteranordnung (22; 122) erfassten Druckwerts (P2) und/oder bei Unterschreiten eines bezogen auf das mindestens eine Filterelement (37) zuströmseitigen minimalen Druckwerts (P1) ausgestaltet ist.

9. Sauggerät nach einem der vorhergehenden Ansprüche, **dadurch gekennzeichnet, dass** es einen Vorgabewert-Sensor (49) zur Erfassung des Saugleistungsvorgabewerts (SV) aufweist.

10. Sauggerät nach einem der vorhergehenden Ansprüche, **dadurch gekennzeichnet, dass** das Sauggerät (20; 120) Bestandteil einer stationären Sauganlage und mit der Saugleitung (70; 170) verbunden ist, wobei an der Saugleitung (70; 170) mindestens zwei Verbraucher-Anschlüsse (86) zum Anschluss von Verbrauchern (90) des Saugstroms (S) vorgesehen sind.

11. Sauggerät nach einem der vorhergehenden Ansprüche, **dadurch gekennzeichnet, dass** die Saugleitung (70; 170) mindestens ein, vorzugsweise an ihrem freien, vom Sauggerät (20; 120) entfernten Ende angeordnetes, Spülventil aufweist.

12. Sauggerät nach einem der vorhergehenden Ansprüche, **dadurch gekennzeichnet, dass** die Steuerungseinrichtung (40; 140) zur stufigen Anpassung, insbesondere Vergrößerung oder Verkleinerung, des Regelung-Sollwerts (P1soll) in Abhängigkeit von mindestens einem Grenzwert, den der Saugleistungsvorgabewert (SV) überschreitet oder unterschreitet, ausgestaltet ist.

13. Sauggerät nach einem der vorhergehenden Ansprüche, **dadurch gekennzeichnet, dass** es eine Stelleinrichtung (47, 147) und/oder eine Konfigurationsschnittelle (48) zur Einstellung eines Basiswertes (P1sollstart) des Regelung-Sollwerts (P1soll) aufweist.

14. Verfahren zum Betreiben eines insbesondere stationären Sauggeräts (20; 120), wobei das Sauggerät (20; 120) ein einen Antriebsmotor (26) umfassendes Saugaggregat (121) zur Erzeugung eines Saugstroms (S) und einen Saugeinlass (38) zum Anschluss einer Saugleitung (70; 170) aufweist, wobei dem Saugaggregat (121) eine mindestens ein Filterelement (37) aufweisende Filteranordnung (22; 122) und ein Schmutzsammelraum (24; 124) vorgelagert sind, wobei das Sauggerät (20; 120) eine Sensoranordnung (50) zur Erfassung mindestens eines eine Strömungsgeschwindigkeit (g) des Saugstroms (S) repräsentierenden Sensorwerts, insbesondere eines Druckwerts (P1, P2) und/oder eines Strömungswerts, aufweist, mit den Schritten:
- Regeln der Strömungsgeschwindigkeit (g) des Saugstroms (S) im Bereich des Sauggeräts (20; 120) anhand eines Regelung-Sollwerts (P1soll) und eines anhand des mindestens einen Sensorwerts gebildeten Regelung-Istwerts (P1ist), wobei das Saugaggregat (121) zur Einstellung seiner Saugleistung anhand eines Saugleistungsvorgabewerts (SV) angesteuert wird, **gekennzeichnet durch**
- Erhöhung oder Absenkung des Regelung-Sollwerts (P1soll) in Abhängigkeit von einer Erhöhung oder Absenkung des Saugleistungsvorgabewerts (SV), der zum Erreichen des Regelung-Sollwerts (P1soll) dem Saugaggregat (121) vorgegeben wird.

15. Programmmodul für ein Sauggerät (20; 120) mit durch einen Prozessor ausführbarem Programmcode, bei dessen Ausführung das Sauggerät (20; 120) die Schritte des Verfahrens gemäß Anspruch 14 ausführt.

## Claims

1. Suction device, in particular stationary suction device (20; 120), wherein the suction device (20; 120) has a suction unit (121) including a drive motor (26), for generating a suction flow (S), and a suction inlet (38) for the connection of a suction line (70; 170) wherein, upstream of the suction unit (121) are a filter assembly (22; 122) with at least one filter element (37) and a dirt collecting chamber (24; 124), wherein the suction device (20; 120) has a sensor array (50) for detecting at least one sensor value representing a flow rate (g) of the suction flow (S), in particular a pressure value (P1, P2) and/or a flow value, wherein the suction device (20; 120) has a control unit (40; 140) with automatic control means (41) for regulating the flow rate (g) of the suction flow (S) in the area of the suction device (20; 120) with the aid of a control target value (P1soll) and with the aid of a control actual value (P1ist) formed with the aid of the sensor value or values,
- wherein the automatic control means (41) activate the suction unit (121) for the setting of its suction power through the presetting of a suction power default value (SV), **characterised in that**
- the control unit (40; 140) is designed to raise or lower the control target value (P1soll) on the basis of an increase or reduction in the suction power default value (SV), which is preset for the suction unit (121) to achieve the control target value (P1soll).

2. Suction device according to claim 1, **characterised in that** it is connected to a suction line (70; 170) with at least two load connections (86) for the connection of loads (90) using the suction flow (S), and the control unit (40; 140) is designed to vary the control target value (P1soll) depending on the number of loads (90) connected to the suction line (70; 170), so that at each load connection (86) of the suction line (70; 170) used by a load (90), a minimum flow rate (g) of the suction flow (S) is provided.

3. Suction device according to claim 1 or 2, **characterised in that** the control unit (40; 140) is designed to vary the control target value (P1soll), depending on a cross-section of the suction line (70; 170).

4. Suction device according to any of the preceding claims, **characterised in that** the control target value (P1soll) and the control actual value (P1ist) in the area of the suction inlet (38) and/or the dirt collecting chamber (24; 124), in particular before the filter assembly (22; 122), are or include detectable physical values, in particular at least one pressure value (P1).

5. Suction device according to any of the preceding claims, **characterised in that** the suction power default value (SV) comprises a speed value for setting a speed for the drive motor (26), and/or a flow value or voltage value for setting an electrical power output of the drive motor (26), or is such a value.

6. Suction device according to any of the preceding claims, **characterised in that** the sensor array (50) includes at least one flow sensor (55) for detecting a flow rate (g) of the suction flow (S), and/or at least one pressure sensor (51, 52) for detecting a pressure value (P1, P2) dependent on the suction flow (S), in particular a pressure sensor (51) located on the inflow side of the filter to detect a first pressure value (P1) and/or a pressure sensor (52) located on the outflow side of the filter towards the suction unit (121), for the detection of a second pressure value (P2).

7. Suction device according to any of the preceding claims, **characterised in that** the control unit (40; 140) increases the control target value (P1soll) to its maximum on the reaching of an upper limit value of at least one measured value, in particular a pressure value (P2) detected downstream of the filter towards the suction unit (121).

8. Suction device according to any of the preceding claims, **characterised in that** the control unit (40; 140) is designed to generate a warning and/or switch off the suction device (20; 120) on reaching a maximum differential pressure (DP) between a first pressure value (P1) detected on the inflow side of the filter element or elements (37) and a second pressure value (P2) detected on the outflow side of the filter assembly (22; 122) and/or on failing to reach a minimum pressure value (P1) on the inflow side of the filter element or elements (37).

9. Suction device according to any of the preceding claims, **characterised in that** it has a default value sensor (49) for detecting the suction power default value (SV).

10. Suction device according to any of the preceding claims, **characterised in that** the suction device (20; 120) is part of a stationary suction facility and is connected to the suction line (70; 170), wherein at the suction line (70; 170) at least two load connections (86) are provided for the connection of loads (90) of the suction flow (S).

11. Suction device according to any of the preceding claims, **characterised in that** the suction line (70; 170) has at least one flushing valve, preferably at its free end furthest from the suction device (20; 120).

12. Suction device according to any of the preceding claims, **characterised in that** the control unit (40; 140) is designed for stepped adjustment, in particular increasing or decreasing the control target value (P1soll) on the basis of at least one limit value which overshoots or undershoots the suction power default value (SV).

13. Suction device according to any of the preceding claims, **characterised in that** it has a setting device (47, 147) and/or a configuration interface (48) for setting a base value (P1sollstart) of the control target value (P1soll).

14. Method of operating a suction device (20; 120), in particular stationary, wherein the suction device (20; 120) has a suction unit (121) including a drive motor (26), for generating a suction flow (S), and a suction inlet (38) for the connection of a suction line (70; 170) wherein, upstream of the suction unit (121) are a filter assembly (22; 122) with at least one filter element (37) and a dirt collecting chamber (24; 124), wherein the suction device (20; 120) has a sensor array (50) for detecting at least one sensor value representing a flow rate (g) of the suction flow (S), in particular a pressure value (P1, P2) and/or a flow value, with the steps:
- regulating the flow rate (g) of the suction flow (S) in the area of the suction device (20; 120) with the aid of a control target value (P1soll) and with the aid of a control actual value (P1ist) formed with the aid of the sensor value or values, wherein the suction unit (121) is activated for the setting of its suction power with the aid of a suction power default value (SV), **characterised by**
- raising or lowering the control target value (P1soll) on the basis of an increase or reduction in the suction power default value (SV), which is preset for the suction unit (121) to achieve the control target value (P1soll).

15. Program module for a suction device (20; 120), with program code which may be executed by a processor, in the execution of which the suction device (20; 120) performs the steps of the method according to claim 14.

## Revendications

1. Appareil d'aspiration, en particulier appareil d'aspiration (20 ; 120) stationnaire, dans lequel l'appareil d'aspiration (20 ; 120) présente un groupe d'aspiration (121) comprenant un moteur d'entraînement (26) servant à produire un flux d'aspiration (S) et une entrée d'aspiration (38) servant à raccorder un conduit d'aspiration (70 ; 170), dans lequel un ensemble filtrant (22 ; 122) présentant au moins un élément filtrant (37) et un espace de collecte de souillures (24 ; 124) est monté en amont du groupe d'aspiration (121), dans lequel l'appareil d'aspiration (20 ; 120) présente un ensemble de capteurs (50) servant à détecter au moins une valeur de capteur représentant une vitesse d'écoulement (g) du flux d'aspiration (S), en particulier une valeur de pression (P1, P2) et/ou une valeur d'écoulement, dans lequel l'appareil d'aspiration (20 ; 120) présente un dispositif de commande (40 ; 140) pourvu de moyens de régulation (41) servant à réguler la vitesse d'écoulement (g) du flux d'aspiration (S) dans la zone de l'appareil d'aspiration (20 ; 120) à l'aide d'une valeur théorique de régulation (P1soll) et d'une valeur réelle de régulation (P1ist) formée à l'aide de l'au moins une valeur de capteur,
- dans lequel les moyens de régulation (41) pilotent le groupe d'aspiration (121) servant à régler une puissance d'aspiration en spécifiant une valeur de spécification de puissance d'aspiration (SV), **caractérisé en ce**
- **que** le dispositif de commande (40 ; 140) est configuré pour augmenter ou abaisser la valeur théorique de régulation (P1soll) en fonction d'une augmentation ou d'un abaissement de la valeur de spécification de puissance d'aspiration (SV), qui est spécifiée au groupe d'aspiration (121) afin d'atteindre la valeur théorique de régulation (P1soll).

2. Appareil d'aspiration selon la revendication 1, **caractérisé en ce qu'**il est relié à un conduit d'aspiration (70 ; 170) avec au moins deux raccords de consommateur (86) servant à raccorder des consommateurs (90) du flux d'aspiration (S), et **en ce que** le dispositif de commande (40 ; 140) est configuré afin de modifier la valeur théorique de régulation (P1soll) en fonction du nombre des consommateurs (90) raccordés au conduit d'aspiration (70 ; 170) de sorte qu'une vitesse d'écoulement minimale (g) du flux d'aspiration (S) est présente au niveau de chaque raccord de consommateur (86), utilisé par un consommateur (90), du conduit d'aspiration (70 ; 170).

3. Appareil d'aspiration selon la revendication 1 ou 2, **caractérisé en ce que** le dispositif de commande (40 ; 140) est configuré afin de modifier la valeur théorique de régulation (P1soll) en fonction d'une section transversale du conduit d'aspiration (70 ; 170).

4. Appareil d'aspiration selon l'une quelconque des revendications précédentes, **caractérisé en ce que** la valeur théorique de régulation (P1soll) et la valeur réelle de régulation (P1ist) sont ou comprennent, dans la zone de l'entrée d'aspiration (38) et/ou dans l'espace de collecte de souillures (24 ; 124), en particulier devant l'ensemble filtrant (22 ; 122), des valeurs physiques pouvant être détectées, en particulier au moins une valeur de pression (P1).

5. Appareil d'aspiration selon l'une quelconque des revendications précédentes, **caractérisé en ce que** la valeur de spécification de puissance d'aspiration (SV) comprend une valeur de vitesse de rotation servant à régler une vitesse de rotation du moteur d'entraînement (26) et/ou une valeur de courant ou une valeur de tension servant à régler une puissance électrique du moteur d'entraînement (26) ou est une valeur de ce type.

6. Appareil d'aspiration selon l'une quelconque des revendications précédentes, **caractérisé en ce que** l'ensemble de capteurs (50) comprend au moins un capteur d'écoulement (55) servant à détecter une vitesse d'écoulement (g) du flux d'aspiration (S) et/ou au moins un capteur de pression (51, 52) servant à détecter une valeur de pression (P1, P2) dépendant du flux d'aspiration (S), en particulier un capteur de pression (51) disposé côté flux entrant du filtre servant à détecter une première valeur de pression (P1) et/ou un capteur de pression (52) disposé côté flux sortant du filtre en direction du groupe d'aspiration (121) servant à détecter une deuxième valeur de pression (P2).

7. Appareil d'aspiration selon l'une quelconque des revendications précédentes, **caractérisé en ce que** le dispositif de commande (40 ; 140) augmente la valeur théorique de régulation (P1soll) au maximum jusqu'à atteindre une valeur limite supérieure au moins d'une grandeur de mesure, en particulier d'une valeur de pression (P2) détectée côté flux sortant du filtre en direction du groupe d'aspiration (121).

8. Appareil d'aspiration selon l'une quelconque des revendications précédentes, **caractérisé en ce que** le dispositif de commande (40 ; 140) est configuré pour produire une alerte et/ou pour mettre hors service l'appareil d'aspiration (20 ; 120) lorsqu'une pression différentielle (DP) maximale entre une première valeur de pression (P1) détectée côté flux entrant de l'au moins un élément filtrant (37) et une deuxième valeur de pression (P2) détectée côté flux sortant de l'ensemble filtrant (22 ; 122) est atteinte et/ou lorsque la valeur atteinte est inférieure à une valeur de pression (P1) minimale côté flux entrant par rapport à l'au moins un élément filtrant (37).

9. Appareil d'aspiration selon l'une quelconque des revendications précédentes, **caractérisé en ce qu'**il présente un capteur de valeur de spécification (49) servant à détecter la valeur de spécification de puissance d'aspiration (SV).

10. Appareil d'aspiration selon l'une quelconque des revendications précédentes, **caractérisé en ce que** l'appareil d'aspiration (20 ; 120) fait partie intégrante d'une installation d'aspiration stationnaire et est relié au conduit d'aspiration (70 ; 170), dans lequel au moins deux raccords de consommateur (86) servant à raccorder des consommateurs (90) du flux d'aspiration (S) sont prévus au niveau du conduit d'aspiration (70 ; 170).

11. Appareil d'aspiration selon l'une quelconque des revendications précédentes, **caractérisé en ce que** le conduit d'aspiration (70 ; 170) présente au moins une soupape de rinçage, disposée de préférence au niveau de l'extrémité libre du conduit d'aspiration éloignée de l'appareil d'aspiration (20 ; 120).

12. Appareil d'aspiration selon l'une quelconque des revendications précédentes, **caractérisé en ce que** le dispositif de commande (40 ; 140) est configuré afin d'adapter progressivement, en particulier d'accroître ou réduire, la valeur théorique de régulation (P1soll) en fonction d'au moins une valeur limite, à laquelle la valeur de spécification de puissance d'aspiration (SV) est supérieure ou inférieure.

13. Appareil d'aspiration selon l'une quelconque des revendications précédentes, **caractérisé en ce qu'**il présente un dispositif de réglage (47, 147) et/ou une interface de configuration (48) servant à régler une valeur de base (P1 sollstart) de la valeur théorique de régulation (P1soll).

14. Procédé servant à faire fonctionner un appareil d'aspiration (20 ; 120) en particulier stationnaire, dans lequel l'appareil d'aspiration (20; 120) présente un groupe d'aspiration (121), comprenant un moteur d'entraînement (26), servant à produire un flux d'aspiration (S) et une entrée d'aspiration (38) servant à raccorder un conduit d'aspiration (70 ; 170), dans lequel un ensemble filtrant (22 ; 122) présentant au moins un élément filtrant (37) et un espace de collecte de souillures (24 ; 124) sont montés en amont du groupe d'aspiration (121), dans lequel l'appareil d'aspiration (20 ; 120) présente un ensemble de capteurs (50) servant à détecter au moins une valeur de capteur représentant une vitesse d'écoulement (g) du flux d'aspiration (S), en particulier une valeur de pression (P1, P2) et/ou une valeur d'écoulement, comprenant l'étape qui suit consistant à :
- réguler la vitesse d'écoulement (g) du flux d'aspiration (S) dans la zone de l'appareil d'aspiration (20 ; 120) à l'aide d'une valeur théorique de régulation (P1soll) et d'une valeur réelle de régulation (P1ist) obtenue à l'aide de l'au moins une valeur de capteur, dans lequel le groupe d'aspiration (121) est piloté afin de régler sa puissance d'aspiration à l'aide d'une valeur de spécification de puissance d'aspiration (SV),
**caractérisé par** l'étape suivante consistant à :
- augmenter ou abaisser la valeur théorique de régulation (P1 soll) en fonction d'une augmentation ou d'un abaissement de la valeur de spécification de puissance d'aspiration (SV), qui est spécifiée au groupe d'aspiration (121) afin d'atteindre la valeur théorique de régulation (P1 soll).

15. Module de programme pour un appareil d'aspiration (20 ; 120) comprenant un code de programme pouvant être exécuté par un processeur, lors de l'exécution duquel l'appareil d'aspiration (20 ; 120) exécute les étapes du procédé selon la revendication 14.
